Europäisches Patentamt

European Patent Office

Office européen des brevets

(19)

(11) Numéro de publication : **0 351 257 B1**

(12) **FASCICULE DE BREVET EUROPEEN**

(45) Date de publication du fascicule du brevet :
20.01.93 Bulletin 93/03

(51) Int. Cl.⁵ : **G01B 11/24, G01B 11/30**

(21) Numéro de dépôt : **89401310.1**

(22) Date de dépôt : **11.05.89**

(54) **Appareil pour le contrôle optique du profil interne d'un tube ou d'un alésage.**

(30) Priorité : **17.05.88 FR 8806588**

(43) Date de publication de la demande :
**17.01.90 Bulletin 90/03**

(45) Mention de la délivrance du brevet :
**20.01.93 Bulletin 93/03**

(84) Etats contractants désignés :
**DE FR GB NL SE**

(56) Documents cités :
**EP-A- 0 267 705**
**FR-A- 2 065 549**
**FR-A- 2 139 682**
**FR-A- 2 195 337**
**FR-A- 2 301 837**
**GB-A- 2 047 882**
**US-A- 3 602 596**

(56) Documents cités :
**US-A- 4 199 258**
**PATENT ABSTRACTS OF JAPAN, vol. 6, no. 18**
**(P-100)[896], 2 février 1982; & JP-A-56 142 443**
**(TOKYO SHIBAURA DENKI K.K.)06-11-1981**

(73) Titulaire : **HISPANO-SUIZA Société anonyme**
**dite:**
**333, Bureaux de la Colline**
**F-92213 Saint Cloud (FR)**

(72) Inventeur : **Fraignier, Bernard**
**10, rue des Capucines**
**F-93250 Villemomble (FR)**
Inventeur : **Roger, Christian**
**5, rue Charles Duport**
**F-92270 Bois Colombes (FR)**

(74) Mandataire : **Moinat, François**
**S.N.E.C.M.A. Service des Brevets Boîte**
**Postale 81**
**F-91003 Evry Cédex (FR)**

**Description**

La présente invention concerne un appareil pour le contrôle optique du profil interne d'un tube ou d'un alésage.

Cette invention trouve son domaine d'application principalement dans l'inspection in situ des tubes des générateurs de vapeur des centrales nucléaires mais peut se rapporter à l'inspection de tubes ou alésages de grandes longueurs et de faibles diamètres pouvant comporter éventuellement des coudes.

Les tubes des générateurs de vapeur doivent être inspectés pour déceler les défauts les rendant susceptibles de fissurations sous contrainte.

Cette inspection se fait soit à partir de la technique mettant en oeuvre les courants de Foucault pour la détection de défauts dans la paroi des tubes. Une telle méthode est décrite dans le brevet français 2.320.542. Elle se fait aussi par la mesure du profil interne du tube, la présente invention entre dans cette dernière catégorie.

Une technique connue, de détermination du profil interne d'un tube, utilise une sonde à plusieurs doigts pour mesurer simultanément les rayons internes du tube, à plusieurs emplacements autour de sa circonférence, lorsque la sonde est tirée dans le tube, par détection du fléchissement de jauges de contrainte montées sur les doigts. Un tel dispositif est décrit par exemple dans le brevet français 2.553.877.

Une autre technique connue, décrite par exemple dans le brevet français 2.513.753 utilise une sonde profilométrique ayant une tête rotative entraînée par un moteur tournant autour d'un axe longitudinal de la sonde. L'organe de mesure porté par la tête est en contact avec la surface de la paroi interne.

Ces dispositifs connus sont limités dans leur domaine d'utilisation par le contact nécessaire entre l'organe de mesure et la paroi interne, ainsi que par les dispositifs mécaniques associés rendant leur miniaturisation difficile voir impossible pour pouvoir être mis en application dans les zones cintrées des tubes des générateurs de vapeur.

Une autre technique connue, notamment par les brevets français 2.065.549 et 2.195337 et par le brevet britannique 2.047882, consiste à effectuer un contrôle optique. A cet effet, la paroi interne de la cavité est illuminée suivant une section droite déplaçable en translation et la lumière réémise est captée sur un dispositif photo-sensible qui permet d'en faire une analyse. La source et le récepteur étant à l'extérieur de la cavité, ces dispositifs sont réservés aux cavités rectilignes de faibles profondeurs.

Pour étudier les cavités de plus grandes profondeurs, il a déja été proposé par le US-A-4.199.258, de placer une source de lumière à l'intérieur de la sonde. Mais ce dispositif ne permet d'éclairer que quelques points de la circonférence, quatre de préférence, il ne permet donc pas, par des déplacements de la sonde, de contrôler la totalité de la surface de la cavité, mais tout au plus des variations de diamètre.

La présente invention a pour objet de remédier à ces inconvénients en proposant, pour le contrôle du profil interne d'une cavité de révolution, un dispositif optique dont les différents composants mécaniques et opto-électroniques permettent une miniaturisation importante.

L'appareil selon l'invention est du genre comportant une sonde capable d'être déplacée en translation à l'intérieur de la cavité et reliée à un système d'alimentation et d'analyse placé à l'extérieur de la cavité. Conformément à l'invention cet appareil comporte une source de lumière cohérente placée à l'intérieur de la sonde et il se caractérise en ce que la source de lumière est associée à un système optique de convergence et à un miroir pour illuminer la paroi de la cavité suivant une ligne correspondant à l'intersection de la paroi avec une section droite, une image de cette ligne étant formée à partir de la lumière réémise par la paroi, sur un capteur opto électronique également placé dans la sonde et les écarts de cette image par rapport à une image théorique représentant les variations du profil interne de la cavité.

Suivant différents modes de réalisation, la source cohérente peut illuminer la paroi de la cavité, soit en la balayant au moyen d'un miroir tournant, soit de manière permanente au moyen d'un miroir conique. Lorsque la paroi est illuminée par balayage au moyen d'un miroir tournant, la lumière réémise par la paroi de la cavité peut avantageusement être renvoyée, sur le capteur opto-électronique au moyen d'un second miroir tournant synchrone du premier. Dans ce cas, le capteur opto-électronique peut être linéaire si il tourne en synchronisme avec les miroirs tournants.

Dans un autre mode de réalisation, et quel que soit le mode d'illumination de la paroi, la lumière réémise peut être renvoyée, au moyen d'un objectif optique grand angle, sur le capteur opto-électronique.

Enfin dans un dernier mode de réalisation possible, la lumière réémise par la paroi de la cavité peut être renvoyée sur le capteur opto-électronique au moyen d'un miroir conique.

En se référant aux figures schématiques jointes, données à titre non limitatif, on va décrire quelques exemples de mise en oeuvre de l'invention.

La figure 1 représente le principe de fonctionnement d'une sonde suivant un premier mode de réalisation.

La figure 2 représente le principe de fonctionnement d'une sonde suivant un deuxième mode de réalisation.

La figure 3 représente le principe de fonctionnement d'une sonde suivant un troisième mode de réalisation.

La figure 4 représente une sonde conforme à l'invention, réalisée en deux parties.

La figure 5 représente une autre sonde conforme à l'invention, réalisée en une seule partie.

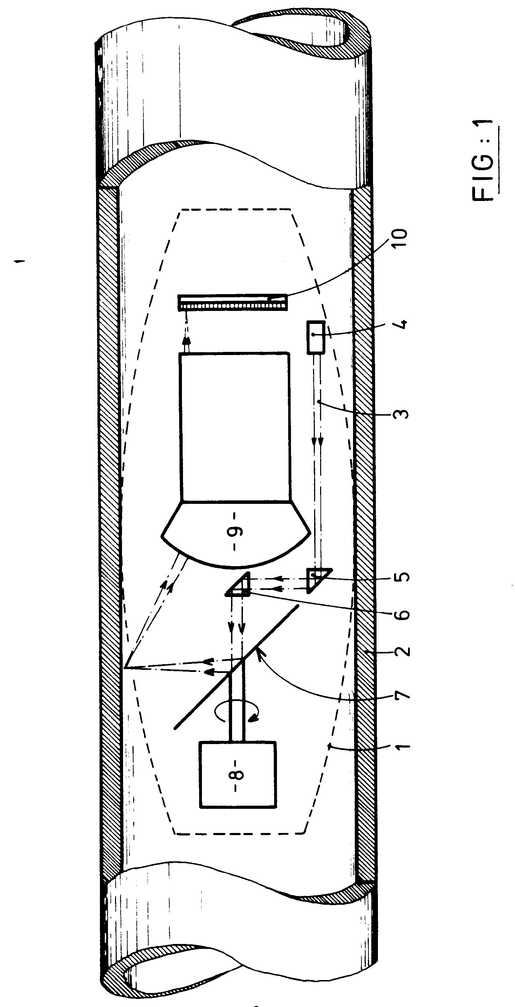

Sur la figure 1 qui représente le principe de fonctionnement d'un premier mode de réalisation de l'invention, on voit une sonde 1, représentée en pointillés, qui se déplace dans un tube 2.

L'éclairage de la surface interne du tube 2 est obtenu avantageusement par un faisceau laser longitudinal 3, issu d'une source et se réfléchissant sur deux prismes 5 et 6 qui le recentre sur un miroir 7 de renvoi sur la surface interne du tube 2. Ce miroir 7 est entraîné en rotation, autour de l'axe longitudinal de la sonde 1 par une motorisation 8 afin que le faisceau laser balaie la surface interne du tube 2 suivant une ligne correspondant à l'intersection avec une section droite.

La surface interne du tube 2 ainsi éclairée se comporte en objet émissif dont l'image se forme, par l'intermédiaire d'un objectif grand angle 9 dans un plan d'observation dans lequel se trouve un capteur opto-électronique matriciel 10. Cette image sur le capteur 10 est constituée d'une ligne qui correspond au profil interne du tube 2. Au profil type correspond une ligne théorique et toute variation du profil se traduit par un écart de l'image par rapport à cette ligne théorique. Une analyse de l'image obtenue sur le capteur opto-électronique 10 permet donc de connaître le profil interne du tube 2. La sensibilité du dispositif dépendra donc du pouvoir de résolution du capteur opto-électronique 10. Si l'on dispose de N points de mesure répartis sur un diamètre du plan image, la résolution sur la mesure du diamètre D du tube sera égale à : $\frac{D}{N}$

La paroi interne étant balayée grâce au miroir tournant 7, on peut imaginer que l'analyse de la lumière réémise soit faite au moyen d'un second miroir tournant, synchrone du premier et réalisant, sur le capteur opto-électronique l'image de la ligne éclairée sous forme d'un point. Dans cette hypothèse le capteur opto-électronique pourrait être linéaire, à condition qu'il soit tournant et synchrone des miroirs.

La complication mécanique entraînée trouverait sa compensation dans une amélioration du pouvoir de résolution, celui-ci étant meilleur pour un capteur opto-électronique linéaire que pour un capteur opto-électronique matriciel.

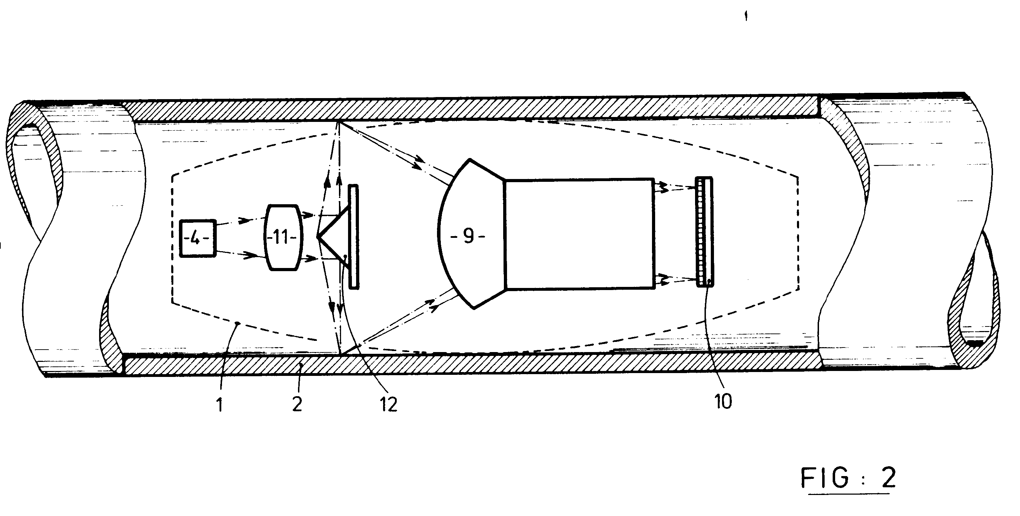

Dans la variante représentée par la figure 2, le faisceau de lumière cohérente issu de la source laser 4 est transformé, au moyen d'un système optique 11 en un faisceau relativement large. Ce faisceau éclaire un réflecteur conique 12 dont l'axe se confond avec l'axe longitudinal de la sonde 1. Le système optique 11 est déterminé de telle manière que le faisceau de lumière converge sur la surface interne du tube 2. Celle-ci est ainsi éclairée suivant une ligne qui correspond à son intersection avec une section droite du tube. Comme précédemment, une image de cette ligne est formée, par l'intermédiaire d'un objectif grand angle 9 sur un capteur opto-électronique matriciel 10.

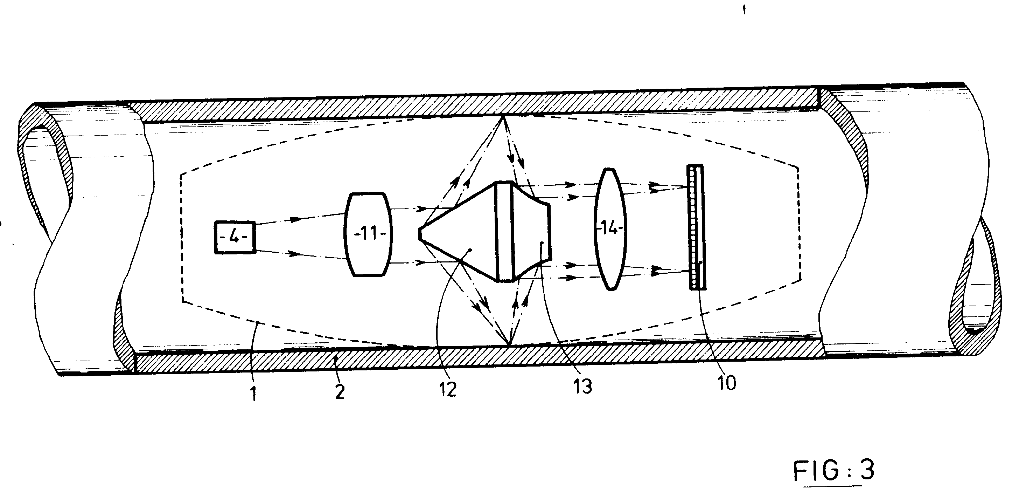

Dans la variante représentée par la figure 3, le mode d'illumination de la paroi interne du tube 2 est identique à celui de la réalisation de la figure 2. Par contre, le renvoi de la lumière réémise se fait au moyen d'un second miroir conique 13. L'image étant ensuite formée sur le capteur opto-électronique 10 au moyen d'une optique 14. Le miroir conique 13 de renvoi a avantageusement une variation de section non linéaire de manière à créer un agrandissement non linéaire permettant d'améliorer la résolution de la mesure, seule la périphérie du plan image délivrant des informations pertinentes. Ce rapport d'agrandissement non linéaire permet ainsi d'améliorer la précision de la mesure pour un système d'observation bidimensionnel donné.

Les impératifs de diamètre disponible à l'intérieur des tubes des échangeurs de chaleur des générateurs de vapeur conduisent à proposer plusieurs solutions permettant la miniaturisation de la sonde.

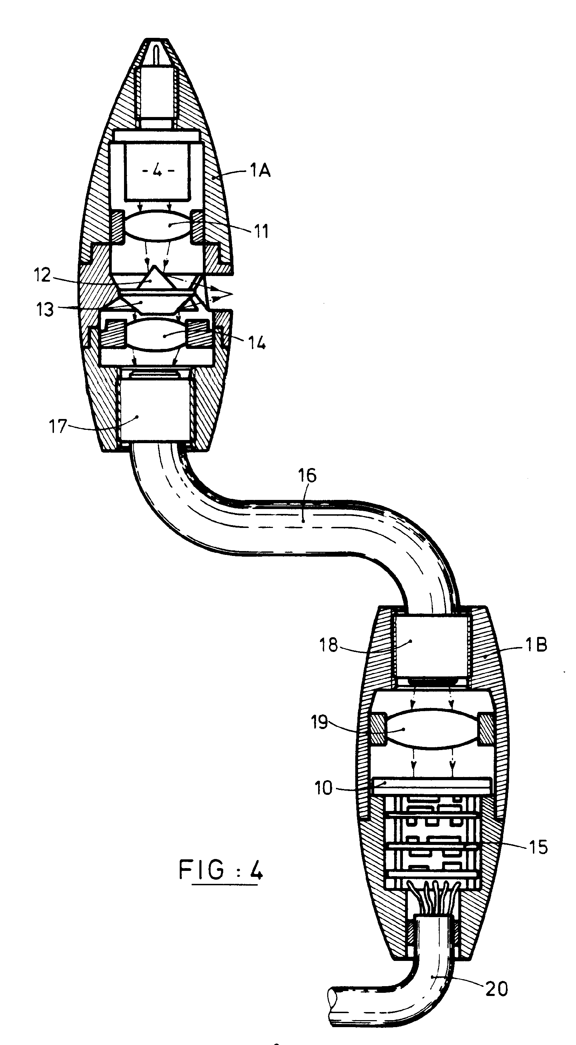

Dans la disposition représentée à la figure 4, la sonde 1 est décomposée en deux ogives 1A et 1B. La première ogive 1A comprend, à titre d'exemple, l'ensemble du dispositif représenté à la figure 3, à l'exception du capteur opto-électronique 10. En effet, celui-ci et le circuit hybride d'exploitation 15 qui lui est associé sont placés dans la seconde ogive 1B. La liaison entre les ogives 1A et 1B se fait au moyen d'une fibre optique 16. Cette fibre optique reçoit sur son entrée 17 l'image formée par l'optique 14.

Cette image disponible à la sortie 18 de la fibre optique est transposée, au moyen d'un objectif 19 sur le capteur opto-électronique 10. Le signal produit par le circuit hybride 15 est transmis à l'extérieur pour analyse par un cable 20. Dans une autre forme, le capteur 10 pourrait être en contact direct avec l'extrémité 18 de la fibre, rendant ainsi inutile l'objectif 19.

La solution qui vient d'être présentée permet de disposer d'un volume relativement important pour la partie électronique, mais elle nécessite une fibre optique 16 de résolution, de souplesse et de robustesse suffisantes. Une variante consisterait donc à laisser le capteur opto-électronique 10 dans l'ogive 1A, à placer l'électronique de traitement dans l'ogive 1B avec une liaison filaire de courte longueur entre les deux ogives. Si cette solution possède l'avantage de procurer un volume encore plus important pour la partie électronique, elle nécessite une attention particulière sur la qualité des liaisons à fréquences élevées.

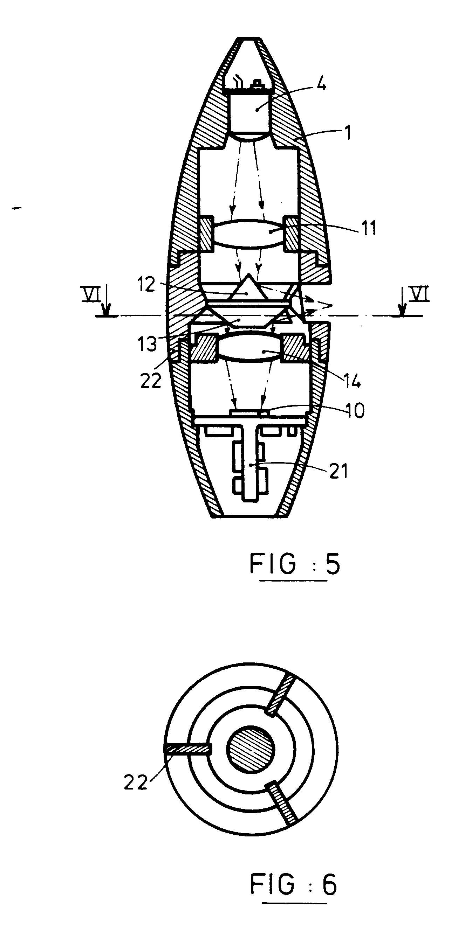

Enfin, une dernière variante, représentée à la figure 5, est proposée. Elle consiste à intégrer à l'ogive unique de la sonde 1 toute la partie optique et opto-électronique ainsi qu'une partie minimale 21 du circuit électronique, le reste de celui-ci se trouvant à l'extérieur.

La figure 6, suivant une coupe VI-VI de la figure 5 permet de comprendre comment le faisceau lumineux peut explorer la quasi totalité de la paroi interne du tube. Des fenêtres qui occupent la presque totalité de la périphérie de la sonde sont ménagées dans la paroi de celle-ci.

Les parties extrêmes de la sonde ne sont reliées entre-elles que par des bras 22 d'épaisseur minimale pour assurer la rigidité mécanique de l'ensemble.

On peut ainsi imaginer que les deux extrémités de la sonde soient réunies entre elles par une bague transparente ayant les qualités optiques requises.

## Revendications

1. Appareil pour le contrôle optique du profil interne d'un tube ou d'un alésage du genre comportant une sonde (1) capable d'être déplacée en translation à l'intérieur de la cavité (2) du tube ou de l'alésage et reliée à un système d'alimentation et d'analyse placé à l'extérieur de la cavité, une source de lumière (4) étant placée à l'intérieur de ladite sonde,
caractérisé en ce que,
la source de lumière est associée à un système optique de convergence et à un miroir pour illuminer la paroi de la cavité suivant une ligne correspondant à l'intersection de la paroi avec une section droite, et en ce que une image de cette ligne est formée, à partir de la lumière réémise par la paroi, sur un capteur opto-électronique (10) également placé dans la sonde et les écarts de cette image par rapport à une image théorique représentant les variations du profil interne de la cavité.

2. Appareil pour le contrôle optique du profil interne d'un tube ou d'un alésage, selon la revendication 1, caractérisé en ce que, la source de lumière (4) émet un faisceau fin qui est projeté sur la paroi de la cavité au moyen d'un miroir tournant (7) autour de l'axe longitudinal de la sonde, ledit miroir (7) étant entraîné par un moteur (8)

3. Appareil pour le contrôle optique du profil interne d'un tube ou d'un alésage, selon la revendication 1, caractérisé en ce que, la source de lumière (4) émet un faisceau qui est réfléchi par un miroir conique (12) de manière à éclairer en permanence toute la ligne correspondant à l'intersection de la paroi avec la section droite de la cavité.

4. Appareil pour le contrôle optique du profil interne d'un tube ou d'un alésage, selon la revendication 2. caractérisé en ce que, la lumière réémise par la paroi de la cavité est renvoyée, au moyen d'un miroir tournant, synchrone du premier, sur le capteur opto-électronique (10).

5. Appareil pour le contrôle optique du profil interne d'un tube ou d'un alésage, selon l'une des revendications 2 ou 3, caractérisé en ce que, la lumière réémise par la paroi de la cavité est renvoyée, au moyen d'un objectif optique grand angle (9) sur le capteur opto-électronique (10).

6. Appareil pour le contrôle optique du profil interne d'un tube ou d'un alésage, selon la revendication 3, caractérisé en ce que, la lumière réémise par la paroi de la cavité est renvoyée au moyen d'un miroir conique (13), sur le capteur opto-électronique (10).

7. Appareil pour le contrôle optique du profil interne d'un tube ou d'un alésage, selon la revendication 6, caractérisé en ce que le miroir conique (13) de renvoi de la lumière réémise a une variation de section non linéaire.

## Patentansprüche

1. Gerät zur optischen Kontrolle des Innenprofils eines Rohrs oder einer Bohrung
mit einer Sonde (1), die mit einer Translationsbewegung im Innern des Hohlraums des Rohrs oder der Bohrung verschoben werden kann und mit einem außerhalb des Rohrs angeordneten Speise- und Analysesytem verbunden ist,
sowie mit einer in Innern der Sonde angeordneten Lichtquelle (4),
dadurch gekennzeichnet,
daß der Lichtquelle ein optisches Konvergenzsystem und ein Spiegel zugeordnet sind zu Beleuchtung der Wandung des Hohlraums entlang einer Linie, die der Schnittlinie der Wandung mit einer Querschnittsfläche entspricht,
und daß aus dem von der Wandung zurückgeworfenen Licht auf einem ebenfalls in der Sonde angeordneten optoelektronischen Aufnehmer ein Bild dieser Linie erzeugt wird,
wobei die Abweichungen dieser Bildes gegenüber einem theoretischen Bild die Änderungen den Innenprofils des Hohlraums repräsentieren.

2. Gerät zur optischen Kontrolle des Innenprofils eines Rohrs oder einer Bohrung nach Anspruch 1, dadurch gekennzeichnet, daß die Lichtquelle (4) ein feines Strahlenbündel aussendet, das mit Hilfe eines um eine Längsachse der Sonde drehenden Spiegels (7) auf die Wandung des Hohlraums projiziert wird, wobei dieser Spiegel (7) von einem Motor (8) angetrieben wird.

3. Gerät zur optischen Kontrolle des Innenprofils eines Rohrs oder einer Bohrung nach Anspruch 1, dadurch gekennzeichnet, daß die Lichtquelle (4) ein Strahlenbündel aussendet, das von einem konischen Spiegel (12) so reflektiert wird, daß es ständig die ganze Linie beleuchtet, die der Schnittlinie der Wandung mit der Querschnittsfläche des Hohlraums entspricht.

4. Gerät zur optischen Kontrolle des Innenprofils eines Rohrs oder einer Bohrung nach Anspruch 2, dadurch gekennzeichnet, daß das von der Wandung des Hohlraums zurückgeworfene Licht mit Hilfe eines Spiegels, der sich synchron mit dem ersten Spiegel dreht, auf den optoelektronischen Aufnehmer (10) umgelenkt wird.

5. Gerät zur optischen Kontrolle des Innenprofils eines Rohrs oder einer Bohrung nach einem der Ansprüche 2 oder 3, dadurch gekennzeichnet, daß das von der Wandung des Hohlraums zurückgeworfene Licht mit Hilfe eines optischen Weitwinkelobjektivs (9) auf den optoelektronischen Aufnehmer (10) umgelenkt wird.

6. Gerät zur optischen Kontrolle des Innenprofils eines Rohrs oder einer Bohrung nach Anspruch 3, dadurch gekennzeichnet, daß das von der Wandung des Hohlraums zurückgeworfene Licht mit Hilfe eine konischen Spiegels (13) auf den optoelektronischen Aufnehemer (10) umgelenkt wird.

7. Gerät zur optischen Kontrolle des Innenprofils eines Rohrs oder einer Bohrung nach Anspruch 6, dadurch gekennzeichnet, daß der konische Spiegel (13) zu Umlenkung des zurückgeworfenen Licht eine nichtlineare Querschnittsänderung besitzt.

**Revendications**

1. Apparatus for optically monitoring the internal profile of a tube or of a bore, of the type including a probe (1) capable of being moved translationally inside the cavity (2) of the tube or of the bore and connected to a supply and analysis system placed outside the cavity, a light source (4) being placed inside the said probe, characterised in that the light source is combined with an optical convergence system and with a mirror for illuminating the wall of the cavity along a line corresponding to the intersection of the wall with a cross-section and in that an image of this line is formed, from the light re-emitted by the wall, on an optoelectronic sensor (10) also placed in the probe and the deviations of this image with respect to a theoretical image represent the variations in the internal profile of the cavity.

2. Apparatus for optically monitoring the internal profile of a tube or of a bore, according to Claim 1, characterised in that the light source (4) emits a fine beam which is projected onto the wall of the cavity by means of a mirror (7) rotating about the longitudinal axis of the probe, the said mirror (7) being driven by a motor (8).

3. Apparatus for optically monitoring the internal profile of a tube or of a bore, according to Claim 1, characterised in that the light source (4) emits a beam which is reflected by a conical mirror (12) so as to illuminate continuously the entire line corresponding to the intersection of the wall with the cross-section of the cavity.

4. Apparatus for optically monitoring the internal profile of a tube or of a bore, according to Claim 2, characterised in that the light re-emitted by the wall of the cavity is sent back to the optoelectronic sensor (10) by means of a mirror rotating synchronously with the first.

5. Apparatus for optically monitoring the internal profile of a tube or of a bore, according to one of Claims 2 and 3, characterised in that the light re-emitted by the wall of the cavity is sent back to the optoelectronic sensor (10) by means of a wide-angle optical objective (9).

6. Apparatus for optically monitoring the internal profile of a tube or of a bore, according to Claim 3, characterised in that the light re-emitted by the wall of the cavity is sent back to the optoelectronic sensor (10) by means of a conical mirror (13).

7. Apparatus for optically monitoring the internal profile of a tube or of a bore, according to Claim 6, characterised in that the conical mirror (13) for reflecting the re-emitted light has a non-linear cross-section variation.

FIG : 1

FIG : 2

FIG:3

FIG : 4

FIG : 5

FIG : 6